(19) Europäisches Patentamt
European Patent Office
Office européen des brevets

(11) **EP 3 677 880 A1**

(12) **EUROPEAN PATENT APPLICATION**

(43) Date of publication:
**08.07.2020 Bulletin 2020/28**

(21) Application number: **19150373.9**

(22) Date of filing: **04.01.2019**

(51) Int Cl.:
**G01F 23/00** (2006.01)      **B60P 3/22** (2006.01)
**F17C 11/00** (2006.01)      **F17C 13/02** (2006.01)
**G06Q 10/08** (2012.01)      **G08B 21/18** (2006.01)
**G07C 5/00** (2006.01)      **F17C 13/04** (2006.01)
**F17C 13/08** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Senecogaz Holding GmbH & Co. KG
80802 Munich (DE)**

(72) Inventor: **Lysenkov, Andrey
125284 Moscow (RU)**

(74) Representative: **Felber, Josef et al
Felber & Partner AG
Dufourstrasse 116
8008 Zürich (CH)**

(54) **TANK CONTAINER FOR TRANSPORTATION OF LIQUIFIED GAS**

(57)      This General-Purpose Multimodal Transportation Container (GPMTC) for the transportation and storage of such hazardous cargoes has a reservoir (1) with a level gauge being a part of a multipurpose sensor (11), installed downright and passing through the vertical centerline and the horizontal centerline of the graduated reservoir (1). Said sensor (11) is being used to measure the key physical parameters, such as pressure, density of the liquid and vapor phases, temperature of the liquid and vapor phases in several control points. These data are required to determine the volume and the mass of the liquid and vapor phases to calculate the total mass of the cargo in a Central System Unit CSU (18) with processor at any time with the accuracy required and sufficient for fiscal metering and customs clearance. This GPMTC is further equipped with GPS devices (19) with telemetry equipment on the basis of IRIDIUM satellite and GSM networks for determining the location of the GPMTC at any time, and with an interface to send the obtained geographical data including detected or measured actual velocity and direction to a Remote Processing Center.

Fig. 1

EP 3 677 880 A1

**Description**

This invention does concern a tank container for multimodal and/or intermodal transportation of the hazardous cargoes that is integrated into a single automated safety and fiscal metering system to measure and transmit the real time data on the location, displacement and technical condition of the tank container, on quantity and physical condition of the cargo for its fiscal metering, as well as for emergency detection and advance emergency warning purposes in case of cargo vent to atmosphere.

**State of the art**

Currently, known tank containers are not only used for transportation of the hazardous cargoes such as liquefied petroleum gases, liquefied ammonia, and petrochemical products, but also for their interim storage. Furthermore, they allow for their partial discharge, when transferring the tank containers from one consumer to another through the chain. Safety plays a big role when it comes to transportation and storage of the above mentioned substances. Presently, such tank containers hardly allow to monitor their content in a reliable and complete manner.

Presently, such tank containers are delivered by road, rail, and maritime transport. Gas is one of the main types of energy products that is shipped from Russia and the CIS countries to Central and Western Europe. The average transportation leg is approx. 3'000 km. International transportation of the hazardous cargoes is subject to Rules, Conventions, and Codes, such as:

> 1. The International Maritime Dangerous Goods Code (IMDG Code)
> 2. The International Regulations concerning the International Carriage of Dangerous Goods by Rail (RID)
> 3. The European Agreement concerning the International Carriage of Dangerous Goods by Road (ADR)
> 4. The International Convention for Safe Containers (CSC)

There are certain regulations governing each specific transportation mode. However, still, there are no regulations governing the intermodal transportation. At the same time there is no tank container which can be monitored and operated remotely from a remote center.

Existing tank containers, such as disclosed in CN 201 180019, B65D 88/12, 14.01.2009, and SU 1502895, FO4C 13/00 CM, 23.08.1989, allow transporting of the liquefied petroleum gases by rail, sea, and inland water transport.

However, **first,** such tank containers are not general-purpose tank containers, i.e. they can be used either at the top loading/discharge racks, or at the bottom loading/discharge racks. This greatly limits the use of such tank container in intermodal or multimodal applications, especially in international transportation. **Secondly,** the conventional tank containers are characterized by low loading/discharge throughput that is limited by the existing loading/discharge technology implying the connection of one liquid line and one vapor line. **Thirdly,** such containers have no means to monitor the actual volume of the hazardous cargo and its key physical parameters.

Another tank container of the prior art is a tank container that, according to inventor's certificate SU 1502895, F04C 13/00, 23.08.1989, contains a reservoir with a sensor to measure merely the level of the liquid phase of liquefied petroleum gas. The loading/discharge liquid line with the shut-off valve are located at the bottom of the reservoir. The vapor relief valve and safety valve are located at the top of the reservoir.

However, again, this tank container is not a general-purpose one, i.e. it cannot be used at the top loading/discharge racks. This fact limits its usage in intermodal (multimodal) applications, especially in international transportations from East to West. **Secondly,** this tank container is characterized by low loading/discharge throughput. **Thirdly,** it does not provide the modern level of industrial and environmental safety as it does not contain any means for monitoring the key physical parameters of the hazardous cargo, such as temperature, pressure, density, and their change rate.

The tank container according to EP 2 568 209 B1 and Russian Federation utility patent 110166 with priority claim of RU2011125706 is the most advanced tank container at the moment. This tank container allows transporting such hazardous cargoes as liquefied petroleum gases, liquefied ammonia, and also petrochemical products by rail, road, sea, and inland water transport. This container also allows loading/discharge at the existing top <u>and</u> bottom loading and discharge racks, and is fitted with multiple liquid and vapor lines with shut-off valves. Besides, it can be fitted with the devices to meter and indicate the level and temperature of the liquid phase and the pressure in the reservoir. However, the sensors and devices of the said container allow to apply only visual methods to monitor the physical parameters of the hazardous cargo and only with personnel being located in close vicinity to the monitoring and metering devices, i.e. in the hazardous area, with the container in the immovable state. Such design of the tank container, **firstly,** does not allow for fiscal metering and automated real time data transfer when cargo loading/discharge, in particular for partial loading/discharge. **Secondly,** it does not allow for automated control and transfer of the real time data on the changes in the physical parameters of the hazardous cargo, in particular, on the move. Thus, any possibility, even theoretical one, for early immediate response to and, what is more, for early prevention of the situation caused by equipment failure or emergency discharge of the hazardous cargo to atmosphere is completely absent.

Presently, fiscal metering is done by measuring a flow of the liquid phase of the LPG, therefore, these are cubic meters and liters. This measurement data is accepted in retail sales, for example, at gas stations, at special gas carriers, and often does not consider, **firstly,** the thermal expansion factor that significantly affects the volume of the liquid phase, and, **secondly,** the mass of the gas by-passed through the vapor return line. This significantly reduces the accuracy of the measurements during the fiscal metering and may result in a conflict between a supplier and a consumer.

The second measurement method used for fiscal metering is weighing. It is a widely accepted method used during liquified gas loading/discharge into and out of the trucks. The mass of the gas is determined as a difference between the measurements taken before or after charging/discharging. This method allows calculating the mass of the gas, including the vapor phase. However, this method cannot be used for fiscal metering in the event the liquified gas should be partially discharged to several consumers. In this way, it can be said that both of these abovementioned methods have obvious downsides in the context of fiscal metering.

Until now, there have been lots of attempts to apply an indirect static method that measures the level, pressure, average density, and average temperature of the liquid phase of LPG. The essence of the method is that the measured average density and average temperature of the liquid phase of LPG allow determination of a conditional component composition of the liquid and the vapor phases of LPG and measurement of the vapor phase of LPG. Besides, the standard reference table for the reservoir allow the calculation of the volume and the mass of the liquid and the vapor phases of LPG, then the total mass of LPG is calculated. The dynamic control of the nominal error in measurements, including calculation of the value of the nominal error in measurements, the comparison of the same with the set value is performed automatically.

Known in the art is an indirect static method for measuring the mass of LPG wherein the mass M is determined according to the formula:

$$M = V \times \rho$$

where V is the volume of the product in the reservoir. $\rho$ is the average density of the product in the reservoir. The volume of the liquid in the reservoir is measured using standard reference tables for reservoirs according to filling level values. However, LPG in the reservoir is a closed two-phase system, i.e. liquid phase - vapor phase. This leads to the necessity to determine both the mass of the liquid phase, and the mass of the vapor phase according to the above formula. It should be noted that a change in the temperature, pressure, component composition or quantity of LPG in the reservoir is followed by redistribution of LPG between the liquid and the vapor phases which significantly complicates the measurement of the mass of LPG.

Known in the art are the methods for measuring the mass of LPG in the reservoirs based on the measurement of the volume of the liquid phase of LPG with the help of the reference tables for the reservoir and level sensors designed on the basis of capacitive and floating principles. These methods deliver a big error as different amounts of LPG can exist in vapor phase at different temperatures. Besides, the changes in LPG density deliver the errors in the readings of the floating level sensor caused by changes in the depth of immersion of the float in the liquid phase.

Known in the art is a noninvasive method for determining the liquid level and density inside of the reservoir based on the use of an acoustic wave going along the walls of the vessel and measuring the phase difference from the sensor to the receiver. This method is described in patent US 6 053 041. When this method is used, measurements are not dependent on the form and the dimensions of the reservoir. Phase difference oscillations allow both measurement of the liquid level and density. However, this method has a major drawback - a low accuracy of measurements ($\pm 10$ kg/m$^3$) which is not allowing the use of the same for fiscal metering.

Known in the art are methods for using differential pressure gauges to determine the volume and density of liquefied gases. For example, such method is described in patent FR 2 811 752 (G01F 22/00). However, this method provides reliable measurements only in the reservoirs with a regular geometrical shape, and that is a significant drawback. Another measurement method using a differential pressure gauge is described in patent US 6 944 570. This patent describes a differential pressure gauge determining the liquid and gas density value based on the measured pressure. However, these measurements will be valid only for single-component products.

Known in the art are attempts to achieve determination of the LPG level using capacity methods. Such a method is described in the article Liquefied Petroleum Gas Level Control Using Capacitance Instruments authored by Atayanz, Peshchenko, Severin (Gazovaya Promyshlennost, 1997, #6, p. 25-28). According to this method, a vertical capacitance transducer in the form of a cylindrical capacitor, partially filled with the controlled fluid is placed in a container with a compressed gas. In these conditions, the degree of filling of the container with a compressed gas is equal to the degree of submersion of the transducer therein. However, in essence, this method is just one of the ways to control the level of the liquid phase of LPG in the storage vessel, and, secondly, the design of the transducer allows using it solely at the stationary vessels, but not at the tank containers.

The drawback of the above method has been removed by the computational method for determining the physical parameters of LPG in a container as per patent RU 2 262 667 authored by Sovlukov A.S. and Tereshin V.I. The method for determining the physical parameters of LPG in the vessel, as described in the above patent, allows the determination of the mass, level, volume and density of the liquid and the vapor phases of LPG, when measuring the electric capacitance of the RF sensors with further joint functional transformation of the measured capacitances with due regard to geometrical dimensions of this particular vessel. However, this method has a low accuracy of mass measurement conditioned upon a number of significant drawbacks.

The first drawback is low accuracy of level measurement. This is confirmed by the measuring system embodied using the above patent (С·У -5Д ТСЩ .000.115Т·У ) according to the description of the measuring instrument type, registration 17792-04 dated October 26, 2004, approved by Mendeleev Russian Institute for Metrology (VNIIM), having the limit of the absolute intrinsic error in level measurements of ±3 mm, which will, consequently, result in a proportional error in mass measurements. The second drawback is a big error in density measurements, which make this method insufficiently accurate for fiscal metering.

Similar drawbacks are common for other currently known technical solutions using radio-frequency methods, e.g. a method for combining measurements of density and dielectric parameters to determine liquid volumes in containers as per patent GB 2 409 727 (G01V, 11/00) or a radio-frequency method for measuring liquid and gas density by determining integrated dielectric properties as per patent FI 00 102 014 (G01N, 22/00).

The selected prototype is the static method for measuring the liquid mass in a reservoir based on magnetostriction effect embodied in STRUNA measuring system according to TU 4210-001-23434764-2004. This prototype has been selected, as according to the description of the measuring instrument type, reg. No 28116-04 dated November 19, 2004, the limits of the tolerable absolute error in liquid level measurements is ±1 mm, and the limits of the absolute error in liquid density measurements is ±1 kg/m$^3$.

It is important to note an advantageous design of the densitometer for low-density liquids according to patent RU 2 308 019 (G01N, 9/10) embodied in STRUNA measuring system. The said densitometer for low-density liquids contains a submerged balanced vertically-moving float in the form of a toroid with magnets inside, a float balancing device, a float displacement transducer in the form of a magnetostrictive waveguide and complemented by a pulse shaper and a signal processing unit. The temperature effect is automatically compensated by the special algorithm. This densitometer developed under the above said patent embodied in STRUNA measuring system allows high accuracy of density measurements of the liquid phase of LPG. The detailed description of the work is provided in patents RU 2 138 028 (G01F 23/68, G01N 9/10, 1998) and RU 2 285 908 (G01F 23/68, G01N 9/10, 2005.)

The indirect static method for measuring the liquid mass in the reservoir allows adequate measurement of the mass of the liquid phase in the reservoir, but does not consider the fact that LPG in the reservoir is a closed two-phase system, i.e. liquid phase - vapor phase. As a result, direct use of this method for measuring the total mass of LPG in the tank containers leads to big errors in measurements and is therefore unacceptable in fiscal metering.

The fact of the method error when using a float is mentioned in the above article On Systematic Errors in Metering of LPG in a Tank Farm authored by V. Tereshin, A. Sovlukov, A. Letunovsky, Avtogazozapravochny Kompleks Journal, No 5, 2006, is considered in patent RU 2 285 908 (G01F 23/68, G01N 9/10), and embodied in the prototype. But it is only a part of the solution to reduce the value of the error.

Known in the art are options to install pressure, temperature, and level gauges on the reservoirs, e.g. in the prototype, to control the pressure of the vapor phase of LPG (in practice, gauges or manometers are installed in every container with LPG according to safety rules), but they are not used to calculate the density of the vapor phase of LPG.

In addition, the prototype does not provide the ability to evaluate the value of the error in the process of measurements and possibilities to introduce the corrections, which will consider the changes in the level of the liquid phase under the influence of the external and internal factors during receipt and distribution, allowing achievement of the set value of the error in measurements in case of fiscal metering.

Therefore, such tank containers on which the methods as mentioned above are being applied do not allow the fiscal metering of the cargo during full and partial charging/discharging, including data exchange in the real time and remote access modes. The methods exclude possibility to control and transfer the data on the changes in the physical parameters in the real time mode and on the move as well, which are required for immediate response to the situation caused by the partial emergency vent of the vapor phase of the hazardous cargo to atmosphere, as well as for troubleshooting and advanced cargo leakage detection.

**Invention's task**

In view of the many shortcomings of conventional tank containers as mentioned above, it is the task of this invention to provide a **G**eneral-**P**urpose **M**ultimodal **T**ransportation **C**ontainer (GPMTC) for the transportation of the hazardous cargoes on rail, road, see with intermodal function, that is chargeable and dischargeable and any rack, on top or bottom of the tank container, on its left or on its right side, which besides the transportation and interim storage allows for automatic, real time fiscal metering of the cargo, in particular, during loading/discharge. The GPMTC should also allow to obtain information on the geographical location of the GPMTC, its speed and displacement vector, misalignment of its base frame, performance of the main production operations, as well as the controlling of the current values and rate of change of such cargo parameters as total mass, pressure, temperature, density of the liquid and vapor phases. All measured values should be transferable automatically to the Remote Control Center. As a result, the GPMTC should improve the reliability and safety of loading/discharge, transportation, and interim storage of the hazardous cargo. And such GPMTC should ensure "transparent" cargo handling during fiscal metering and customs procedures, and optimize logistics. This GPMTC should provide a fundamentally new system of remote metering and control of LPG, which makes it to be autonomous anywhere in the world and allow to safely and effectively perform cargo operations under the control of this system via satellite.

**Solution according to the invention**

The abovementioned task is resolved and the technical results are achieved by Tank container for transportation and storage of such hazardous cargo as liquefied petroleum gases, liquefied ammonia, and also petrochemical products which is designated as General-Purpose Multimodal Transportation Container (GP-MTC), containing the reservoir (1) with the internal baffles (20) preventing the liquid from sloshing while moving, and fitted with a safety relief valve, and which is *characterized in that*

A) it is designed for intermodal use by comprising a top and a bottom valve cabinet, both accessible from both sides of the tank container when used at the loading/discharge racks, no matter whether these are top or bottom loading railway racks, or storage vessels at the loading/discharge stations for gas carriers and tank containers, gas holders, the further designed for intermodal use for transportation on roads, rails and by water,

B) it comprises sensors and features for remote metering and control of LPG by a computational method for measuring gas in full volume, including the liquid and vapor phases in the tank and the volumes of gas at charging and discharging, which makes it to be autonomous anywhere in the world and allows to safely and effectively perform cargo operations under the control, using a universal and transparent international metering and control of LPG, and

C) it comprises all equipment for a telemetric exchange of these data with a Remote Control Center in real time anywhere in the world at any time.

The design of the GPMTC is shown in the drawing by way of example. In the following, this GPMTC will be described along this drawing in more detail and its functionality will be explained.

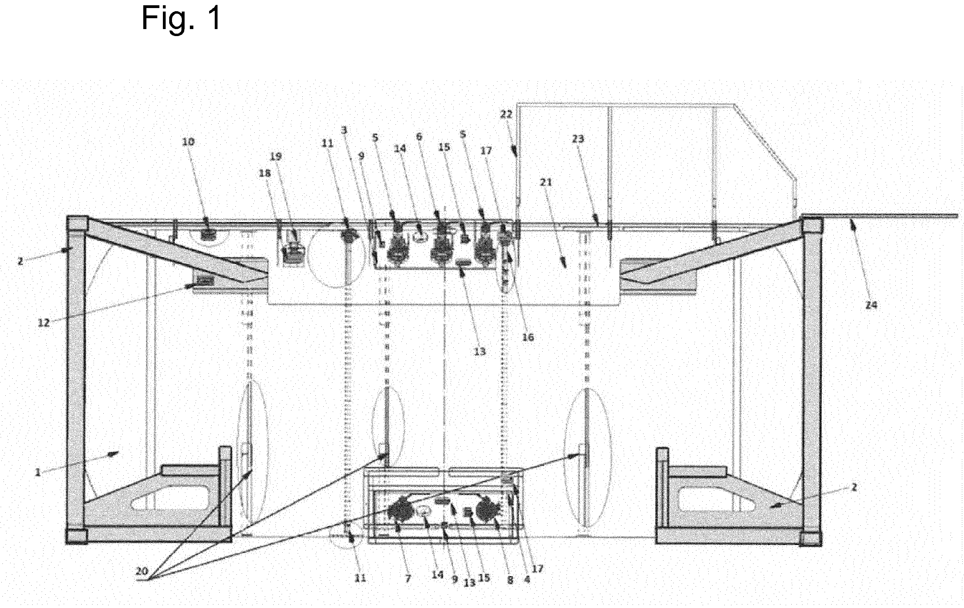

Figure 1    shows the General-Purpose Multimodal Transportation Container (GPMTC) in a side view with all relevant parts.

The reservoir 1 for the liquified petroleum gas is a welded vessel consisting of a circular ring and two elliptic bottoms. The interior of the vessel is divided by the internal baffles 20. Two or more baffles 20 prevent the liquid from sloshing inside the tank while moving. Such baffles are mandatory in order to fulfill the regulatory requirements. This reservoir 1 is built into a steel frame 2 as lead-bearing structure which has the contours of a rectangular parallelepiped and contains corner fittings which include the structure elements to fix the reservoir inside the frame. These corner fittings can be used for loading, unloading, stacking, and fixing of the tank container. The dimension of the GPMTC correspond to that of 20, 30 or 40 ft standard sea container.

The GPMTC is equipped with a top valve cabinet 3 and bottom valve cabinet 4 and a safety valve 10. Each valve cabinet 3, 4 has a at least one liquid line with a shut-off valve and a vapor relief valve 5, 6, 7. The top valve cabinet 3 includes two lines 5 to load/discharge the liquid phase (LP) with the safety valves and remote tripping units, and a line 6 to vent the vapor phase (VP) with the safety valve and remote tripping unit. The bottom valve cabinet 4 includes one line 7 to load/discharge the liquid phase (LP) with the safety valve, and a line 8 to vent the vapor phase (VP) with the safety valve. The top valve cabinet lines are available from both sides of the tank container when used at the top loading/discharge racks. Such a design allows to load/discharge the tank container at the existing top and bottom loading/discharge racks, and at the loading/discharge stations for the gas carriers and tank containers. The shut-off valves 5,6,7 include the remote tripping units and the internal valve that automatically shuts off in case of an accidental movement of the tank container, its location in a fire zone, in case of loss of containment, and inlet or outlet line failure (performs the function of a speed valve). The valve cabinet opening sensors 9 tell the actual state of the cabinet at any time. The pressure relief valve 10 allows for emergently reduction of pressure inside the reservoir when it exceeds a specified limit. This safety valve 10 can also be completed with a bursting disc. Also, there are the level gauge for the LP 16 and a multipurpose sensor 11. Sensor 11 measures the gross mass of liquefied gas, mass of the LP, mass of the VP, density of LP, density of VP, volume, level, pressure, temperature at several control points (at least six).

The unit which is controlling the location and the displacement vector of the tank container in three-dimensional space 12 includes gyros and accelerometers. It allows defining the GPMTC's displacement vector and the alignment of the GPMTC's base with the horizontal plane. A vapor detector 13 serves as a leaking control device and is available as an optional feature. Every valve cabinet of the GPMTC is fitted with a manometer 14, a temperature sensor 15 with indicator, a display unit 17 for the level gauge 16. The manometer 14, the temperature sensor 15, the level gauge 16 for the liquid phase and the display unit 17 are not a part of the single automated safety and fiscal metering system. Rather, this equipment is designed to be used for visual control of the physical parameters of the hazardous cargo during loading/discharge operations or in case of failure of the single automated system or other emergency situations.

The GPMTC is further equipped with a multilayer sun and fire protective shield 21. This sun shield 21 does keep the reservoir away from heading caused by direct sunshine. Foldable rails 22 for the upper access platform increase the safety for the maintenance personnel who needs to get access to tank equipment via the upper access platform 23 with folding walkway 24 during loading/discharge operations at the top loading/discharge racks. Further, there is a manhole hatch and a case for the accompanying documents as well as a static electricity protection device.

The reservoir 1 of the GPMTC is equipped with the level gauge 16 installed downright and passing through the vertical centerline and the horizontal centerline of the reservoir. The GPMTC is equipped with a multifunctional sensor 11 to measure key physical parameters of the hazardous cargo, such as the density of the liquid phase, the density of the vapor phase, the temperature in several control points, the pressure of the vapor phase to calculate the volume of the liquified gas, the mass of the liquid phase and vapor phase, and the total mass of the LPG in the reservoir 1. The GPMTC is equipped with a set of sensors 11, 12, including the accelerometers and gyros to identify the displacement vector of the GPMTC and misalignment of the GPMTC's base with the horizontal plane. The GPMTC is equipped with opening/closing sensors 9 for valve cabinets 3, 4 and the document case. All sensors 11 are combined into a single network and via the interface converter and IS barrier are connected to a Central System Unit 18 with independent power supply, controller, memory card, GPS sensor, interface converter and transmit /receive IRIDIUM-GSM antenna unit 19, in order to exchange the data and commands with the Remote Control Center via the satellite and GSM networks. A special purpose unit serves to collect, pre-process, and transfer the data from the external devices to the Central System Unit 18, ensuring metering of the mass of vapor by-passed when LPG discharge to a customer's vessel using the external metering equipment such as Coriolis mass meter or flowmeter. In summary, this Control System Unit 18 serves for data collection, processing, calculation, and transmission adapted to receive data from the external devices, e.g. from Coriolis mass and flow meters at the gas filling stations or a gas pumping stations which also serve as gas storages. The Control System Unit 18 can be fitted with a removable memory card to be used to backup and store important telemetry data during a one or two year period.

The tank container is further fitted with these items specified below which are not shown and designated in figure 1:

- Cable lines connecting the sensors to the CSU
- Cable lines, interface converter and connectors in the CSU to connect to the external devices (e.g. to the Coriolis flow or mass meter)
- Intrinsic Safety barrier
- Connection points for static electricity protection circuit
- Manhole hatch
- Ladder to the upper access platform
- Case for the accompanying documents
- Corner fittings

When designing and manufacturing the tank container, all international rules and regulations governing the transportation of the hazardous cargoes, as well as the regulations related to oil, gas, and chemical industries were considered. It therefore fully complies with the requirements of the international Rules, Conventions, Codes, and Treaties governing the transportation of the hazardous cargos.

Thus, the GPMTC is able to transfer to a Remote Control Center the real time information on its actual location, deviation from the route, motion vector, and misalignment of the GPMTC's base with the horizontal plane, valve cabinets and document case opening/closing, as well as loading/discharge operations, movement of the GPMTC to the interim storage site or another type of vehicle, passing through the customs clearance and self-test results. Besides, the key data on the physical condition of the hazardous cargo, such as changes in pressure, temperature, and mass of the cargo due to its loading/discharge, emergency vent of the vapor phase or cargo leakage are transferred to such a Remote Control Center in the real time. Timely transferred information allows to avoid or to warn in advance of the possible emergency situations, such as partial vapor phase vent to atmosphere, loss of containment, fire, unauthorized access to the shut-off valves and/or accompanying documents.

For the first time, this intermodal tank container for railroad, sea and road transport is equipped with the required and sufficient amount of data collection devices is combined with a telemetric system for collection and transmission of the information on the condition of the hazardous cargo, the physical condition of the components of the tank container, and possible emergency situations, and uses the standardized measuring and calculation method to control the volume of the cargo during its loading, transportation, interim storage, and discharge in real time.

A key advantage of the GPMTC is that it is able to measure the mass of the cargo with the high degree of accuracy required and sufficient for fiscal metering and customs clearance. Thus, the invention solves the main problem with the application of the tank containers in intermodal and/or multimodal LPG transportation which does not allow to apply the dynamic scales on the railroad for fiscal metering and customs clearance due to the transportation of two or three tank containers on a single flat car. The conventional system does not allow to weight the containers separately before or after the loading/discharge.

The static method is used to measure the total (sum) mass of the cargo in the GPMTC. The application of this method allows measuring the level, average density, and average temperature of the liquid phase. Then, the volume of the LP is determined in accordance with the measured level, using the reference tables for the reservoir and the correction for the misalignment of the GPMTC's base with the horizontal plane. The volume of the VP is calculated. The available data allows to calculate the mass of the LP as the product of the volume and the average density of the LP. Simultaneously, the pressure inside the reservoir and the average temperature of the VP is measured, and the average density of the VP is calculated. The mass of the VP and total (sum) mass of the cargo is calculated as the sum of the masses of the LP and the VP. The control of the relative error in measurements and the comparison of the same with the set value is performed automatically.

The technical result is the online measurement of the total (sum) mass of the cargo, including during the partial loading/discharge operations, with a degree of accuracy required and sufficient for fiscal metering and customs clearance.

Applicant has developed a prototype of the GPMTC with which the claimed method is used to measure the total (sum) mass of the liquified petroleum gases, liquefied ammonia, and petrochemical products. The test results fully confirmed the correctness of the suggested solution and high accuracy of the measurements, even exceeding that ones required and sufficient for fiscal metering.

As a result, the GPMTC provides a high degree of accuracy of the calculated mass of loaded, discharged, or transported in the GPMTC. The calculation of the exact mass of cargo is ensured by the introduction of the correction value for the readings provided by the level gauge. The correction value is introduced by the set of gyros and accelerometers that detect the misalignment of the GPMTC's base with the horizontal plane. Besides the set of gyros and accelerometers detects the displacement vector of the GPMTC in three-dimensional space. Furthermore, the GPMTC is fitted with a GPS sensor used to detect the geographical position and the velocity of the object, telemetry equipment on the basis of IRIDIUM satellite and GSM networks, vapor detectors (leakage control devices), valve cabinet opening sensors and document case.

The GPMTC transfers the real time data on the actual location, deviation from the route, velocity, displacement vector, slope angle, opening/closing of the valve cabinets and document case, as well as information on loading/discharge operations and tank container transfer to an interim storage site or another transport, time of customs clearance, and self-test results to a Remote Control Center. Furthermore, the Remote Control Center receives the real time information on changes in pressure, temperature, or mass of the hazardous cargo caused by tank container loading/discharge, emergency vapor vent, or leakage. Such timely delivered information allows either to prevent the emergency situation, or to warn in advance of such situations as emergency partial vapor phase vent to atmosphere, loss of containment, fire, unauthorized access to the shut-off valves and/or accompanying documents.

## Advantages of the invention

This **G**eneral-**P**urpose **M**ultimodal **T**ransportation **C**ontainer (GPMTC) offers many advantages over the conventional tank containers:

A) When computing the exact mass of the cargo in the GPMTC, the calculation method that considers the mass of the vapor phase is used. The application of this method is conditioned by the availability of the pressure, temperature, liquid phase, and vapor phase density sensors, specifically placed electronic level gauge, as well as the set of sensors with gyros and accelerometers that allow to introduce a compensating value when the GPMTC's base deviates from the horizontal plane and accurately calculate the volume of liquid and vapor phases.

B) The reservoir of every GPMTC is calibrated in a specific manner, considering the volume and the level of the liquid, which, being combined with the density, pressure, temperature sensors, correctly placed level gauge, gyros, and accelerometers, which allows it to measure and calculate the mass of the cargo with the degree of accuracy required and sufficient for fiscal metering and customs clearance.

C) All information received by the GPMTC's Central System Unit is available within the single automated safety and fiscal metering system anytime and anywhere (100% coverage) due to the application of telemetry and IRIDIUM+GSM equipment.

D) GPS-GLONASS-GALILEO equipment allows to determine the actual location and the velocity of the GPMTC at any time, while the gyro and the accelerometers allow to detect the displacement vector during the transportation and handling operations.

E) The single automated safety and fiscal metering system is also activated in case of emergency situations or possible emergency situations such as partial vapor phase vent to atmosphere, loss of containment, fire, unauthorized access to the shut-off valves and/or accompanying documents. The received information together with GPMTC's traffic schedule and information on the scheduled cargo load/discharge operations allow to respond promptly and to take all necessary measures to prevent, warn in advance, and eliminate the consequences of the emergency situations. As a result, the <u>G</u>eneral-<u>P</u>urpose <u>M</u>ultimodal <u>T</u>ransportation <u>C</u>ontainer (GPMTC) ensures <u>improved safety</u> that cannot be achieved with the existing tank containers.

F) 100% control of the GPMTC's traffic, its geographical location, start and completion of the loading/discharge operations, change in transportation mode allow to <u>eliminate or reduce significantly the costs</u> associated with GPMTC location at the interim storage sites.

In summary, the technical innovation of the intermodal tank container is the presence of a fundamentally new system of remote metering and control of LPG, which makes it to be autonomous anywhere in the world and allows to safely and effectively perform cargo operations under the control of this system via satellite. A universal and transparent international metering and control of LPG is added to the principle of intermodal transportation of gas. The solution of this general-purpose tank container combines three principles: 1. Intermodality, 2. The computational method for measuring gas in full volume (including the liquid and vapor phases) and 3. Telemetry of this data. The usage of this solution creates a fundamentally different transport vehicle, which also combines the metering and control system, and provides this possibility and control in real time, anywhere in the world at any time. The new tank-container tank, basically, is both a universal vehicle and a universal system for international measurements, metering and control of LPG gas and other products indicated in the list.

**List of Numerals:**

1.    Graduated reservoir
2.    Frame components
3.    Top valve cabinet
4.    Bottom valve cabinet
5.    Loading/discharge unit for the liquid phase (LP) of the top valve cabinet with the safety relief valve, shut-off valves, and remote tripping unit
6.    Supply/vent unit for the vapor phase (VP) of the top valve cabinet with the safety relief valve, shut-off valves, and remote tripping unit

7.    Loading/discharge unit for the liquid phase (LP) of the bottom valve cabinet with the safety relief valve and shut-off valves
8.    Supply/vent unit for the vapor phase (VP) of the bottom valve cabinet with the safety relief valve and shut-off valves
9.    Valve cabinet opening sensor
10.    Safety relief valve
11.    Multi-purpose sensor
12.    Position (inclination) sensing and displacement vector detecting unit (accelerometers and gyro)
13.    Vapor detector (leakage control devices), available as option
14.    Manometer*
15.    Temperature sensor with indicator *
16.    Level gauge for the LP (level detector) *
17.    Display unit for the level gauge*
18.    Central system unit (CSU) with independent power supply
19.    GPS-IRIDIUM-GSM antenna unit
20    Internal baffles
21.    Sunshield
22.    Foldable rails for the upper access platform
23.    Upper access platform
24.    Foldable walkway

**Claims**

1.    Tank container for transportation and storage of such hazardous cargo as liquefied petroleum gases, liquefied ammonia, and also petrochemical products which is designated as <u>G</u>eneral-<u>P</u>urpose <u>M</u>ultimodal <u>T</u>ransportation <u>C</u>ontainer (GPMTC), containing the reservoir (1) with the internal baffles (20) preventing the liquid from sloshing while moving, and fitted with a safety relief valve (10),
***characterized in that***

A) it is designed for intermodal use by comprising a top and a bottom valve cabinet (3, 4), both accessible from both sides of the tank container when used at the loading/discharge racks, no matter whether these are top or bottom loading railway racks, or storage vessels at the loading/discharge stations for gas carriers and tank containers, gas holders, the further designed for intermodal use for transportation on roads, rails and by water,
B) it comprises sensors and features for remote metering and control of LPG by a computational method for measuring gas in full volume, including the liquid and vapor phases in the tank and the volumes of gas at charging and discharging, which makes it to be autonomous anywhere in the world and allows to safely and effectively perform cargo operations under the control, using a universal and transparent international metering and control of LPG, and

C) it comprises all equipment for a telemetric exchange of these data with a Remote Control Center in real time anywhere in the world at any time.

2. Tank container for transportation and storage of such hazardous cargo according to claim 1, *characterized in that* under character

A) for intermodal use it comprises a steel frame (2) as lead-bearing structure which has the contours of a rectangular parallelepiped and contains corner fittings which include the structure elements to fix the reservoir (1) inside the frame, and these corner fittings are usable for loading, unloading, stacking, and fixing of the tank container for dimension corresponding to 20, 30 or 40 ft standard sea containers,

B) for the computational method for measuring gas in full volume, the reservoir (1) of the GPMTC is fitted with the level gauge being a part of the multipurpose sensor (11), installed downright and passing through the vertical centerline and the horizontal centerline of the graduated reservoir (1) used to measure the key physical parameters, such as pressure, density of the liquid and vapor phases, temperature of the liquid and vapor phases in several control points required to determine the volume and the mass of the liquid and vapor phases to calculate the total mass of the cargo in a Central System Unit CSU (18) with processor at any time with the accuracy required and sufficient for fiscal metering and customs clearance, and under character

C) the GPMTC it is equipped with GPS devices (19) with telemetry equipment on the basis of IRIDIUM satellite and GSM networks for determining the location of the GPMTC at any time, and with an interface to send the obtained geographical data including detected or measured actual velocity and direction to a Remote Processing Center, further equipped with vapor detectors (13) as leakage control devices, valve cabinet opening sensors (9) and with a document case, and that all equipment installed on the GPMTC are combined into a single network and are connected via the interface converter and IS barrier to the Central System Unit (18) with independent power supply, containing the controller, memory card, GPS sensor, transmit/receive IRIDIUM-GSM antenna unit (19), equipment to exchange the data and commands with a remote control center via IRIDIUM or GSM networks, as well as the special-purpose unit to collect, pre-process, and transmit the data from the external devices to the Central System Unit (18), which ensures the measurement of the mass of the bypassed vapor during loading/discharge of the LPG via external metering equipment such as Coriolis mass meter or flowmeter.

3. Tank container for transportation and storage of such hazardous cargoes according to claim on of the preceding claims, *characterized in that* a set of gyros and accelerometers (12) that detect the displacement vector and misalignment of the GPMTC's base with the horizontal plane are present which ensure a high degree of accuracy of the mass of loaded, discharged, or transported in the GPMTC cargo calculated by the Central System Unit (18) by the introduction correction values for the readings provided by the level gauge.

4. Tank container for transportation and storage of such hazardous cargoes according to one of the preceding claims, *characterized in that* it is fitted with the sensors (11-13), devices and equipment for continuous metering and online transfer to the Remote Control Center (18) of the information on the physical parameters of the hazardous cargo and their change rate, that is the pressure inside the reservoir, the density, the volume, the temperature of the liquid and vapor phases.

5. Tank container for transportation and storage of such hazardous cargoes according to one of the preceding claims, *characterized in that* the Remote Control Center (18) is provided with an independent power supply and is is designed to collect and process data on the geographical location and linear velocity independently collected by the GPS sensor, and further process information on the displacement vector in three-dimensional space and the slope angle in respect of the horizontal plane from the set of gyros and accelerometers (12), information on leakage detection from the vapor detector (13), information on opened valve cabinets and document case from the sensors (9), and measured data when connected to the external devices such as Coriolis mass meters or flowmeters, and is designed to self-test and compensate readings of the level sensor for the liquid phase.

6. Tank container for transportation and storage of such hazardous cargoes according to one of the one of claims 2 to 5, *characterized in that* all the sensors installed on the GPMTC are combined into a single network, and are connected to the Central System Unit (CSU) (18) with independent power supply via the interface converter and IS barrier.

**7.** Tank container for transportation and storage of such hazardous cargoes according to one of claims 2 to 6, ***characterized in that***
the Central System Unit (CSU) (18) contains a power supply controller, a memory card and is connected to the GPS sensor, transmit/receive IRIDIUM-GSM antenna unit (19) in order to exchange data and commands with a Remote Control Center via the satellite system and/or GSM network, and a special-purpose unit to collect, pre-process, and transfer the data from the external devices to the Central System Unit CSU (18), which allows measurement of the mass of the bypass vapor when LPG discharging to the vessel of a consumer, and when GPMTC loading via the Coriolis mass meter or flowmeter.

**8.** Tank container for transportation and storage of such hazardous cargoes according to one of the preceding claims, ***characterized in that***
a sun shield (21) is mounted along the top of the tank container (1) in order to keep the tank away from direct sunshine and to avoid unnecessary heating up of the contained load, and further an upper access platform (23) with foldable rails (22) is mounted on the top of the tank (1) for the maintenance personnel as well as foldable walkway (24) to get access from the rack or next standing tank container.

Fig. 1

Europäisches
Patentamt

European
Patent Office

Office européen
des brevets

## EUROPEAN SEARCH REPORT

Application Number

EP 19 15 0373

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 2 568 209 A1 (ECSCO AG) 13 March 2013 (2013-03-13) * column 1, line 27 * * column 2, lines 29, 31, 33, 38-39, 47, 48, 50 * * column 3, lines 1, 5, 17, 40-42 * * paragraph [0014] * | 1-8 | INV. G01F23/00 B60P3/22 F17C11/00 F17C13/02 G06Q10/08 G08B21/18 G07C5/00 F17C13/04 F17C13/08 |
| Y | US 10 082 416 B1 (LEASE BENJAMIN NEAL [US] ET AL) 25 September 2018 (2018-09-25) * column 1, lines 60, 66 * * column 2, lines 2,7,25-26, 29-32 * * column 3, lines 22-23, 64 * * column 4, lines 16, 32, 35-45 * * column 6, line 32 - line 34 * * column 7, lines 6, 31-36 * * column 8, lines 6, 16-17, 30-36 * * column 9, lines 3, 32-33, 36, 42,50,60 * * column 10, line 1 - line 7 * * column 11, lines 45, 67 * * column 12, line 39 - line 52 * * figure 3 * * figure 6 * * figure 8 * | 1-8 | |
| A | US 9 850 845 B2 (AGILITY FUEL SYSTEMS INC [US]) 26 December 2017 (2017-12-26) * figures 2,3 * | 1-8 | TECHNICAL FIELDS SEARCHED (IPC) G01F G07C G06Q B60P F17C G08B |
| E | CN 109 383 359 A (HE H; WANG T; WANG Y; WU D; ZHANG Y) 26 February 2019 (2019-02-26) * page 4 - page 9 * | 2-7 | |
| A | US 6 012 598 A (ANTONIOU ARIS [US]) 11 January 2000 (2000-01-11) * column 4, line 43; figures 1-4 * | 1,2 | |

-/--

The present search report has been drawn up for all claims

| Place of search | Date of completion of the search | Examiner |
|---|---|---|
| The Hague | 24 June 2019 | Decaix, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 15 0373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/321834 A1 (HUGHES MATTHEW J [US] ET AL) 12 November 2015 (2015-11-12) * figures 2, 5-6 * ----- | 1,2 | |
| A | WO 2009/147162 A1 (SHELL INT RESEARCH [NL]; JANSSEN FRANCISCUS ANTONIUS HE [NL] ET AL.) 10 December 2009 (2009-12-10) * page 11, line 28 - page 12, line 2 * ----- | 2 | |

TECHNICAL FIELDS
SEARCHED        (IPC)

The present search report has been drawn up for all claims

| Place of search | Date of completion of the search | Examiner |
|---|---|---|
| The Hague | 24 June 2019 | Decaix, François |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 0373

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2019

| Patent document cited in search report | | | Publication date | Patent family member(s) | | | Publication date |
|---|---|---|---|---|---|---|---|
| EP | 2568209 | A1 | 13-03-2013 | EP | 2568209 | A1 | 13-03-2013 |
| | | | | PL | 2568209 | T3 | 31-05-2017 |
| US | 10082416 | B1 | 25-09-2018 | NONE | | | |
| US | 9850845 | B2 | 26-12-2017 | CA | 2893826 | A1 | 13-06-2013 |
| | | | | EP | 2788215 | A1 | 15-10-2014 |
| | | | | US | 2013197777 | A1 | 01-08-2013 |
| | | | | US | 2018328309 | A1 | 15-11-2018 |
| | | | | WO | 2013086345 | A1 | 13-06-2013 |
| CN | 109383359 | A | 26-02-2019 | NONE | | | |
| US | 6012598 | A | 11-01-2000 | NONE | | | |
| US | 2015321834 | A1 | 12-11-2015 | CA | 2889959 | A1 | 06-11-2015 |
| | | | | US | 2015321834 | A1 | 12-11-2015 |
| | | | | US | 2019168957 | A1 | 06-06-2019 |
| WO | 2009147162 | A1 | 10-12-2009 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201180019
- SU 1502895
- EP 2568209 B1
- RU 110166
- RU 2011125706
- US 6053041 A
- FR 2811752

- US 6944570 B
- RU 2262667, Sovlukov A.S. and Tereshin V.I.
- GB 2409727 A
- FI 00102014
- RU 2308019
- RU 2138028
- RU 2285908

**Non-patent literature cited in the description**

- **ATAYANZ ; PESHCHENKO ; SEVERIN.** Liquefied Petroleum Gas Level Control Using Capacitance Instruments. *Gazovaya Promyshlennost,* 1997, vol. 6, 25-28

- **V. TERESHIN ; A. SOVLUKOV ; A. LETUNOVSKY.** *Avtogazozapravochny Kompleks Journal,* 2006